# EUROPÄISCHE PATENTSCHRIFT

(11) **EP 0 632 969 B1**
(45) Veröffentlichungstag und Bekanntmachung des Hinweises auf die Patenterteilung: **12.01.2000**
(21) Anmeldenummer: 94107807.3
(22) Anmeldetag: 20.05.1994
(51) Int. Cl.: A24D 3/10

(54) **Filtertow und Verfahren zu dessen Herstellung sowie Tabakrauchfilterelement und Verfahren zu dessen Herstellung**
Filtertow and process for its manufacture as well as tobacco smoke filter and process for its manufacture
Cordon filtrant et son procédé de fabrication ainsi qu'une filtre pour fumée de tabac et son procédé de fabrication

(30) Priorität: 09.07.1993 DE 4322965
(43) Veröffentlichungstag der Anmeldung: 11.01.1995
(73) Patentinhaber: Rhodia Acetow GmbH, 79108 Freiburg (DE)
(72) Erfinder: Teufel, Eberhard, Dipl.-Chem., 79194 Gundelfingen (DE); Willmund, Rolf, Dipl. biol. Dr. habil., 79312 Emmendingen (DE)
(74) Vertreter: Hagemann, Heinrich, Dr.rer.nat., Dipl.-Chem.

(56) Entgegenhaltungen:
- EP-A- 0 597 478
- WO-A-93/07771
- WO-A-93/24685
- FR-A- 2 324 247
- DATABASE WPI Derwent Publications Ltd., London, GB; AN 83-714266 & JP-A-58 098 411 (TEIJIN KK) 11. Juni 1983

## Beschreibung

Die Erfindung betrifft ein Filtertow, bestehend aus Celluloseacetatfilamenten und/oder Celluloseacetatspinnfasern.
Die Erfindung betrifft ferner ein Verfahren zur Herstellung eines solchen Filtertows durch im wesentlichen
- Erspinnen von Celluloseacetatfilamenten durch Pressen einer Lösung von Celluloseacetat mit einer Acetylzahl von mindestens 53 % in Aceton durch eine Spinndüse mit mehreren Öffnungen und gegebenenfalls anschließendes Zerschneiden der Celluloseacetatfilamente zu Celluloseacetatspinnfasern und
- Zusammenfassen einer Vielzahl der so erhaltenen Celluloseacetatfilamente und/oder Celluloseacetatspinnfasern zu einem Filtertow.

Die Erfindung betrifft auch ein Tabakrauchfilterelement, bestehend aus einem Abschnitt eines queraxial verdichteten, mit Hilfe eines Weichmachers für Celluloseacetat oder eines Klebstoffes gehärteten Filtertows aus Celluloseacetatfilamenten und/oder Celluloseacetatspinnfasern.
Schließlich betrifft die Erfindung ein Verfahren zur Herstellung eines solchen Tabakrauchfilterelements durch Versehen eines Filtertows, bestehend aus Celluloseacetatfilamenten und/oder Celluloseacetatspinnfasern, mit einem Weichmacher für Celluloseacetat oder einem Klebstoff, anschließendes queraxiales Verdichten und gegebenenfalls Umhüllen dieses Filtertows mit einem Umhüllungsstreifen, Zerschneiden des so verdichteten und gegebenenfalls umhüllten Filtertows in einzelne Tabakrauchfilterstäbe und schließlich Zerschneiden dieser Tabakrauchfilterstäbe in einzelne Tabakrauchfilterelemente.

Zigarettenfilter verrotten vergleichsweise langsam und sind deshalb an Plätzen, an denen viel geraucht wird, für weite Teile der Bevölkerung ein Ärgernis.

Für die überwiegende Zahl der Zigarettenfilter wird heute faserförmiges Celluloseacetat mit einer Acetylzahl zwischen 53 % und 57 % eingesetzt (vgl. dazu beispielsweise die US-Patentschrift 2,953,837. Die in dieser Schritt angegebenen Zahlenwerte, nämlich 38 % bis 41 %, für den Acetylgehalt entsprechen den zuvor genannten Werten 53 % bis 57 % für die Acetylzahl).
Im Vergleich mit anderen, insbesondere synthetischen Polymeren ist ein solches Celluloseacetat zwar gut biologisch abbaubar, jedoch sind die Zeiträume, nach denen Zigarettenfilter aus einem solchen Material in Faserform unter der Einwirkung von Umgebungseinflüssen zumindest optisch verschwunden sind, unter heutigen Gesichtspunkten zu lang.

Die deutsche Offenlegungsschrift 40 13 293 und die deutsche Offenlegungsschrift 40 13 304 beschreiben zwar Zigarettenfilter, die unter Einwirkung von Umgebungseinflüssen relativ schnell zersetzbar sind, jedoch bestehen diese Zigarettenfilter aus einem Abschnitt eines queraxial verdichteten Faserstrangs aus Fasern aus gesponnenem PHB (Polyhydroxybuttersäure) oder einem Copolymer aus PHB und PHV (Polyhydroxyvaleriansäure). Solche Polymere werden derzeit nicht, zumindest nicht in nennenswertem Umfang, zur Herstellung von Filtertow und Tabakrauchfilterelementen verwendet, was sich möglicherweise
- mit der zu geringen industriellen Verfügbarkeit dieser Polymere,
- mit der gegenüber Celluloseacetat unterschiedlichen Geschmacksbeeinflussung des Rauches
   und
- mit noch ungeklärten verfahrenstechnischen Problemen bei der Verarbeitung solcher Polymere zu Filtertow und Tabakrauchfilterelementen (beispielsweise in Zusammenhang mit der Härtung solcher Tabakrauchfilterelemente oder in Zusammenhang mit der Verwendung von problematischen Lösungsmitteln beim Erspinnen von Fäden aus diesen Polymeren)
   erklären läßt.

Aus der deutschen Offenlegungsschrift 39 14 022 sind neue, biologisch durch Kompostieren leicht abbaubare Kunststoffmaterialien und ihre Verwendung zur Herstellung von Hüllen/Behältern für Öllichte, Ewiglichtölkerzen, Kompositionsöllichte, andere Grablichtausführungen, Opferlichten und Folien bekannt. Als Kunststoffmaterialien werden in der deutschen Offenlegungsschrift 39 14 022 solche auf der Basis von Celluloseestern, wie Celluloseacetat, mit Zusätzen, wie Polyester, Zitronensäureestern, Phosphorsäureestern und organischen Eisenverbindungen genannt. Der deutschen Offenlegungsschrift 39 14 022 ist jedoch keinerlei Hinweis auf die Möglichkeit zur Beschleunigung des biologischen Abbaus von Filtertow und Tabakrauchfilterelementen zu entnehmen. Außerdem ist die in der deutschen Offenlegungsschrift 39 14 022 beschriebene Rezeptur zur Herstellung von Filtertow und Tabakrauchfilterelementen wegen des zu hohen Weichmacheranteils im Celluloseacetat nicht geeignet.

Die FR-A-2 324 247 beschreibt die Acetylierung von Cellulosefasern, so daß Celluloseacetatfasern eines einheitlichen Substitutionsgrades entstehen. Die JP-A-58098411 offenbart Hohlfasern aus Celluloseacetat, die durch Schmelzverspinnen hergestellt und anschließend mit einer alkalischen Lösung hydrolisiert werden. Die EP-A-597 478 betrifft Celluloseesterfasern aus Celluloseestern, deren Substitutionsgrad vor dem Versprinnen zu Fasern auf einen bestimmten Wert eingestellt wird. Gemäß der WO-A-9324685 werden Celluloseesterfasern eines mittleren Substitutionsgrades pro Einheit Anhydroglucose zur Verfügung gestellt, um diese als Tabakrauchfilter zu verwenden.

In jüngster Zeit wurde in mehreren wissenschaftlichen Publikationen der mikrobiologische Abbau von Celluloseacetat unter den unterschiedlichsten Umweltbedingungen beschrieben. So beschreibt beispielsweise die Publikation "DEGRADATION OF CELLULOSE ACETATE FILTERS IN AQUEOUS SYSTEMS" von Eberhard Teufel und Rolf Willmund, als Vortrag gehalten auf dem "JOINT MEETING OF SMOKE AND TECHNOLOGY GROUPS" der CORESTA am 16. September 1991 in Utrecht, Niederlande, den Mechanismus des biologischen Abbaus von Celluloseacetat. Eine weitere Publikation, nämlich "THE FATE OF CELLULOSE ACETATE IN THE ENVIRONMENT: AEROBIC BIODEGRADATION OF FILTER TOW FIBERS" von Charles M. Buchanan, Robert M. Gardner, Ronald J. Komarek und David Strickler, als Vortrag gehalten auf der "TOBACCO CHEMIST RESEARCH CONFERENCE" am 22. Oktober 1991 in Asheville, North Carolina, U.S.A., beschreibt den aeroben Abbau von Celluloseacetat.
Eine andere Publikation, nämlich "Effects of Natural Polymer Acetylation on the Anaerobic Bioconversion to Methane and Carbon Dioxide", von C. J. Rivard et al, veröffentlicht in "Applied Biochemistry and Biotechnology", Volume 34/35, 1992, Seiten 725 bis 736, beschreibt den anaeroben Abbau von Celluloseacetat.

Aus allen drei zuvor erwähnten Publikationen geht hervor, daß sowohl der aerobe Abbau als auch der anaerobe Abbau von Celluloseacetat mit abnehmender Acetylzahl schneller vonstatten geht.
Den genannten Publikationen ist jedoch keinerlei Hinweis auf die Möglichkeit zur Beschleunigung des biologischen Abbaus von Filtertow und Tabakrauchfilterelementen aus Celluloseacetat zu entnehmen: Insbesondere die beiden zuletzt genannten Publikationen lassen erkennen, daß der biologische Abbau von Celluloseacetat beschleunigt werden kann, wenn man dessen Acetylzahl verringert, jedoch sagen sie nichts darüber aus, wie dieses für Filtertow und Tabakrauchfilterelemente aus Celluloseacetatfasermaterial technisch realisierbar wäre.

Eine zusammenschauende Betrachtung des Standes der Technik zeigt also, daß für aus Celluloseacetatfasermaterial bestehendes Filtertow sowie Tabakrauchfilterelemente, die aus einem solchen Filtertow hergestellt sind, noch keine Lösung bekannt ist, deren biologischer Abbau zu beschleunigen.

Der Erfindung liegt somit die Aufgabe zugrunde, ein Filtertow, bestehend aus Celluloseacetatfilamenten und/oder Celluloseacetatspinnfasern, zur Verfügung zu stellen, das einen verbesserten biologischen Abbau unter der Einwirkung von Umgebungseinflüssen aufweist.
Der Erfindung liegt auch die Aufgabe zugrunde, ein Verfahren zur Herstellung eines solchen Filtertows zur Verfügung zu stellen.
Ferner liegt der Erfindung die Aufgabe zugrunde, ein Tabakrauchfilterelement, bestehend aus einem Abschnitt eines queraxial verdichteten, mit Hilfe eines Weichmachers für Celluloseacetat oder eines Klebstoffes gehärteten Filtertows aus Celluloseacetatfilamenten und/oder Celluloseacetatspinnfasern, zur Verfügung zu stellen, das einen verbesserten biologischen Abbau unter der Einwirkung von Umgebungseinflüssen aufweist.
Schließlich liegt der Erfindung auch noch die Aufgabe zugrunde, ein Verfahren zur Herstellung eines solchen Tabakrauchfilterelements zu schaffen.

Die Aufgabe wird bezüglich des Filtertows durch ein solches gelöst, bestehend aus Celluloseacetatfilamenten und/oder Celluloseacetatspinnfasern im wesentlichen hergestellt durch Erspinnen von Celluloseacetatfilamenten durch Pressen einer Lösung von Celluloseacetat mit einer Acetylzahl von mindestens 53 % in Aceton durch eine Spinndüse mit mehreren Öffnungen und gegebenenfalls anschließendes Zerschneiden der Celluloseacetatfilamente zu Celluloseacetatspinnfasern und Zusammenfassen einer Vielzahl der so erhaltenen Celluloseacetatfilamente und/oder Celluloseacetatspinnfasern zu einem Filtertow, dadurch gekennzeichnet, daß die Celluloseacetatfilamente bzw. die Celluloseacetatspinnfasern einer Hydrolysebehandlung der Art unterzogen worden sind, daß das an der Oberfläche befindliche Celluloseacetat dieser Filamente und Spinnfasern nach der Hydrolysebehandlung eine Acetylzahl von weniger als 53 %, vorzugsweise von weniger als 49 %, aufweist.

Die vorstehend genannte Aufgabe wird bezüglich des Tabakrauchfilterelements durch ein solches gelöst, das besteht aus einem Abschnitt eines queraxial verdichteten, mit Hilfe eines Weichmachers für Celluloseacetat oder eines Klebstoff gehärteten Filtertows obiger erfindungsgemäßer Art.

Ein vorteilhaftes Verfahren zur Herstellung des obigen Tabakrauchfilterelements gemäß der Erfindung sieht vor ein Versehen eines Filtertows, bestehend aus Celluloseacetatfilamenten und/oder Celluloseacetatspinnfasern, mit einem Weichmacher für Celluloseacetat oder einem Klebstoff, anschließendes queraxiales Verdichten und gegebenenfalls Umhüllen dieses Filtertows in einem Umhüllungsstreifen, Zerschneiden des so verdichteten und gegebenenfalls umhüllten Filtertows in einzelne Tabakrauchfilterstäbe und schließlich Zerschneiden dieser Tabakrauchfilterstäbe in einzelne Tabakrauchfilterelemente, das dadurch gekennzeichnet ist, daß als Filtertow ein solches eingesetzt wird, beim dem das Celluloseacetat, aus dem die Celluloseacetatfilamente und die Celluloseacetatspinnfasern bestehen, in Aceton löslich ist und eine Acetylzahl von mindestens 53 % aufweist, und die Celluloseacetatfilamente bzw. -spinnfasern einer Hydrolysebehandlung der Art unterzogen werden, daß das an der Oberfläche befindliche Celluloseacetat dieser Celluloseacetatfilamente bzw. -spinnfasern nach der Hydrolysebehandlung eine Acetylzahl von weniger als 53 %, vorzugsweise von weniger als 49 %, aufweist.

Eine vorteilhafte Weiterbildung dieses Verfahrens besteht darin, daß die Hydrolysebehandlung mit Hilfe von Natronlauge oder von gasförmigem Ammoniak durchgeführt wird.

Außerdem ist es bevorzugt, daß die Hydrolysebehandlung mit Hilfe von gasförmigem Ammoniak an den Tabakrauchfilterstäben oder an den Tabakrauchfilterelementen durchgeführt wird.

Selbstverständlich kann die Hydrolysebehandlung gemäß der Erfindung auch mit Hilfe anderer Hydrolysemittel als Natronlauge und Ammoniak durchgeführt werden, beispielsweise mit Hilfe von anderen starken Basen oder Säuren, oder sogar mit Hilfe von esterspaltenden Enzymen, wie Esterasen.

Unter einem Filtertow im Sinne der Erfindung soll ein Band aus einer Vielzahl von Celluloseacetatfilamenten und/oder Celluloseacetatspinnfasern verstanden werden (vgl. dazu auch die Definition des Begriffes "Filtertow" in beispielsweise der deutschen Offenlegungsschrift 41 09 603). Vorzugsweise ist das erfindungsgemäße Filtertow ein Band aus einer Vielzahl von Celluloseacetatfilamenten, wobei diese Filamente gekräuselt, insbesondere stauchkammergekräuselt sein können.
Unter einem Filament ist eine praktisch endlose Faser zu verstehen, und der Ausdruck "Spinnfaser" bedeutet eine Faser begrenzter Länge (vergleiche zu diesen beiden Definitionen "Römpps Chemie-Lexikon, achte, neubearbeitete und erweiterte Auflage, Franckh'sche Verlagshandlung, W. Keller & Co., Stuttgart/1987, resp. Band 2, Seite 1283, und Band 5, Seite 3925 - unter Hinweis auf DIN 60 001 T2 vom Dezember 1974).
Das Tabakrauchfilterelement gemäß der Erfindung ist vorzugsweise ein Zigarettenfilter, es kann jedoch auch ein Filter für Zigarren, Zigarillos oder Tabakpfeifen sein.
Unter Acetylzahl versteht man im Sinne der Erfindung den Anteil an gebundener Essigsäure im Celluloseacetat, ausgedrückt in Masse-% (vgl. dazu auch Ullmann's Encyclopedia of Industrial Chemistry, Fifth, Completely Revised Edition, Volume A 5, Seiten 444 und 445 - VCH Verlagsgesellschaft mbH, D-6940 Weinheim, Federal Republic of Germany 1986).

Mit der Erfindung werden folgende Vorteile erreicht:

Für das Filtertow und das Tabakrauchfilterelement gemäß der Erfindung gilt, daß sie gegenüber bekanntem Filtertow und bekannten Tabakrauchfilterelementen aus Celluloseacetatfasermaterial eine Beschleunigung der Verrottungsgeschwindigkeit unter Umgebungseinflüssen zeigen; dennoch ist die Lagerung des Filtertows und des Tabakrauchfilterelements gemäß der Erfindung unter den heute üblichen Bedingungen ohne die Gefahr des mikrobiologischen Abbaus ohne weiteres möglich.

Von besonderem Vorteil ist, daß man für die Herstellung des erfindungsgemäßen Filtertows zunächst einmal vom konventionellen Verfahren zur Herstellung eines aus Celluloseacetatfasermaterial bestehenden Filtertows ausgehen kann; durch die zusätzliche erfindungsgemäße Maßnahme der Hydrolyse erhält man jedoch ein Filtertow, dessen Celluloseacetatfilamente und/oder Celluloseacetatspinnfasern an deren Oberfläche ein Celluloseacetat mit einer Acetylzahl von weniger als 53 %, vorzugsweise von weniger als 49 %, aufweisen, wodurch das erfindungsgemäße Filtertow einen beschleunigten mikrobiologischen Abbau zeigt. Zur Erklärung sei dazu erwähnt, daß das für den beschleunigten mikrobiologischen Abbau erwünschte Celluloseacetat mit einer Acetylzahl von weniger als 49 % nicht in Aceton löslich ist und somit nicht nach dem traditionellen Spinnverfahren (mit Aceton als Lösungsmittel) zu Filamenten versponnen werden kann. Durch die Beibehaltung des Prinzips des konventionellen Verfahrens zur Herstellung eines aus Celluloseacetatfasermaterial bestehenden Filtertows können ferner die Investitionskosten für die Apparatur zur Durchführung des erfindungsgemäßen Verfahrens zur Herstellung des - erfindungsgemäßen - Filtertows relativ niedrig gehalten werden (bei bestehenden Apparaturen bedarf es zur Durchführung dieses erfindungsgemäßen Verfahrens lediglich einer zusätzlichen Anordnung für die Hydrolyse).

Ähnliches gilt für die Herstellung des erfindungsgemäßen Tabakrauchfilterelements: auch hier behält man das Prinzip des traditionellen Verfahrens zur Herstellung eines aus Celluloseacetatfasermaterial bestehenden Tabakrauchfilterelements bei, und die zusätzliche(n) erfindungsgemäße(n) Maßnahme(n) ist (sind) wenig aufwendig.

Die Erfindung wird nachstehend anhand von Beispielen noch näher erläutert.

### Vergleichsbeispiel

Es wurde eine Celluloseacetat-Spinnlösung mit einem Feststoffgehalt von 28 Masse-% Celluloseacetat und 0,5 Masse-% Titandioxid in Aceton hergestellt. Der Wassergehalt dieser Spinnlösung wurde auf 3 Masse-% eingestellt. Das eingesetzte Celluloseacetat hatte eine Acetylzahl von 55,4 % und einen Polymerisationsgrad (DP) von 220. Diese Spinnlösung wurde filtriert und durch Trockenspinnen auf einer herkömmlichen Filtertow-Spinnanlage versponnen. Die gebildeten Celluloseacetatfilamente wurden zu einem Band zusammengefaßt, mit Hilfe einer Stauchkammerkräuselmaschine gekräuselt und in einem Trommeltrockner getrocknet. Das zuvor erwähnte Band hatte beim Eintritt in die Stauchkammerkräuselmaschine eine Eintrittsgeschwindigkeit von 550 m/min. Die Verweildauer des Bandes aus gekräuselten Celluloseacetatfilamenten im Trommeltrockner war 5 Minuten. Das so entstandene Filtertow aus stauchkammergekräuselten Celluloseacetatfilamenten wurde mit Hilfe einer Packmaschine zunächst lose abgelegt und anschließend zu einem Ballen verpresst; der Ballen hatte eine Restfeuchte von 5,5 Masse-%.
Die Spezifikation des so hergestellten Filtertows war 3 Y 35 HK. Diese Spezifikationsbezeichnung bedeutet:

| | |
|---|---|
| Filamenttiter: | 3,3 dtex |
| Gesamttiter: | 38.500 dtex |
| Querschnittsform der Celluloseacetatfilamente: | Y |

Die Daten über den biologischen Abbau des gemäß Vergleichsbeispiel hergestellten Filtertows werden in einer Tabelle nach den Beispielen aufgeführt.

### Beispiel 1

Es wurde eine Spinnlösung wie im Vergleichsbeispiel hergestellt. Mit Hilfe dieser Spinnlösung wurde, wie im Vergleichsbeispiel, Filtertow aus stauchkammergekräuselten Celluloseacetatfilamenten hergestellt, jedoch mit dem Unterschied, daß während der Herstellung dieses Filtertows unmittelbar nach der Stauchkammerkräuselmaschine eine 1-molare Natronlauge auf das aus gekräuselten Celluloseacetatfilamenten bestehende Filtertow aufgesprüht wurde. Die Menge an aufgebrachter Natronlauge betrug 6 Liter pro Stunde. Vor der Trocknung des Filtertows im Trommeltrockner wurde es durch einen Bandtrockner geführt, wobei die Luft mit einer Temperatur von 80° im Bandtrockner mit Wasserdampf gesättigt war. Die Verweildauer des Filtertows im Bandtrockner betrug 7 Minuten.
Anschließend wurde, wie im Vergleichsbeispiel, das Filtertow im Trommeltrockner bis auf eine Restfeuchte von 5,5 Masse-% getrocknet, abgelegt und zu einem Ballen verpresst.
Die Spezifikation des so hergestellten Filtertows entsprach der Spezifikation des gemäß Vergleichsbeispiel hergestellten Filtertows.

Nach drei Wochen Lagerzeit wurde der - verpackte - Ballen geöffnet, es wurde von diesem Ballen eine Probe entnommen und daran die Acetylzahl und der Restalkaligehalt bestimmt. Außerdem wurde mit der zuvor erwähnten Probe die Löslichkeit des Filtertows in Aceton bestimmt.

Die Ergebnisse waren folgende:

| | |
|---|---|
| Acetylzahl: | 53,2 % |
| Restalkaligehalt: | 0,006 % |
| Löslichkeit: | Die Lösung des Filtertows in Aceton (3 %) enthielt deutlich sichtbare Mengen an unlöslichen Anteilen. |

Wie im Vergleichsbeispiel bereits erwähnt, werden die Daten über den biologischen Abbau des gemäß Beispiel 1 hergestellten Filtertows nach den Beispielen in einer Tabelle aufgeführt.

### Beispiel 2

1 Kilogramm des gemäß Vergleichsbeispiel hergestellten Filtertows wurde unter Laborbedingungen wie folgt hydrolisiert:
Das Filtertow wurde in ein Gefäß eingebracht, wonach dieses Gefäß verschlossen wurde.
Das Filtertow wurde in dem geschlossenen Gefäß jeweils nacheinander und jeweils für die Dauer von einer Stunde der Einwirkung von
   - Wasserdampf,
   - Ammoniak-Dampf
      und
   - Kohlendioxid-Gas
      ausgesetzt. Zwischen den einzelnen, zuvor geschilderten Stufen wurde das Gefäß evakuiert.

Die zuvor erwähnte, aus drei Stufen bestehende Behandlung wurde dreimal wiederholt.
Anschließend wurde das Filtertow dem Gefäß entnommen und bezüglich Acetylzahl und Löslichkeit untersucht. Die Ergebnisse dieser Untersuchung waren folgende:

| | |
|---|---|
| Acetylzahl: | 45 % |
| Löslichkeit: | Die Lösung des Filtertows in Aceton (3 %) enthielt deutlich sichtbare Mengen an unlöslichen Anteilen. |

Die Daten über den biologischen Abbau des Filtertows gemäß Beispiel 2 sind - wie zuvor beim Vergleichsbeispiel und beim Beispiel 1 erwähnt - in der nachfolgenden Tabelle aufgeführt.

### Untersuchung der biologischen Abbaubarkeit unter kontrollierten mikrobiologischen Bedingungen

Um die aufgrund der erfindungsgemäßen Merkmale bedingte Beschleunigung des biologischen Abbaus unter definierten mikrobiologischen Bedingungen zu verifizieren, wurde in Anlehnung an dem in der DIN 38 409 H52 beschriebenen Abbautest für wasserlösliche Substanzen eine modifizierte Testmethode für wasserunlösliche Proben entwickelt.
Nach diesem modifizierten Testverfahren wird der mikrobiologische Abbau durch Messung des Sauerstoffverbrauchs der Mikroorganismen während des Abbauvorgangs bestimmt. Der Sauerstoffverbrauch wird manometrisch bestimmt. Das durch den Stoffwechsel der Mikroorganismen gebildete Kohlendioxid wird durch Natriumhydroxid gebunden und beeinflußt dadurch die Druckmessung nicht.

Pro Test wurden jeweils 200 mg Filtertow gemäß Vergleichsbeispiel, Beispiel 1 und Beispiel 2 in eine mineralische Nährlösung eingebracht.

Die für den mikrobiologischen Abbau benötigten Bodenbakterien wurden aus Erdfiltrat gewonnen; die Nährlösungen wurden mit je 2 ml dieser Erdfiltratlösung angeimpft.
Der aus dem Sauerstoffverbrauch errechnete prozentuale Massenverlust der Proben ist in der nachfolgenden Tabelle aufgelistet.

| | % Gewichtsverlust nach Tagen | | |
|---|---|---|---|
| | 20 | 40 | 60 |
| Filtertow nach Vergleichsbeispiel | 0,5 | 1,3 | 2,5 |
| Filtertow nach Beispiel 1 | 0,7 | 2,5 | 7 |
| Filtertow nach Beispiel 2 | 5 | 13 | 20 |

## Patentansprüche

1. Filtertow, bestehend aus Celluloseacetatfilamenten und/oder Celluloseacetatspinnfasern im wesentlichen hergestellt durch Erspinnen von Celluloseacetatfilamenten durch Pressen einer Lösung von Celluloseacetat mit einer Acetylzahl von mindestens 53 % in Aceton durch eine Spinndüse mit mehreren Öffnungen und gegebenenfalls anschließendes Zerschneiden der Celluloseacetatfilamente zu Celluloseacetatspinnfasern und Zusammenfassen einer Vielzahl der so erhaltenen Celluloseacetatfilamente und/oder Celluloseacetatspinnfasern zu einem Filtertow, dadurch gekennzeichnet, daß die Celluloseacetatfilamente bzw. die Celluloseacetatspinnfasern einer Hydrolysebehandlung der Art unterzogen worden sind, daß das an der Oberfläche befindliche Celluloseacetat dieser Filamente und Spinnfasern nach der Hydrolysebehandlung eine Acetylzahl von weniger als 53 %, vorzugsweise von weniger als 49 %, aufweist.

2. Verfahren zur Herstellung eines Filtertows nach Anspruch 1, dadurch gekennzeichnet, daß die Hydrolysebehandlung mit Hilfe von Natronlauge oder mit Hilfe von gasförmigem Ammoniak durchgeführt wird.

3. Tabakrauchfilterelement, bestehend aus einem Abschnitt eines queraxial verdichteten, mit Hilfe eines Weichmachers für Celluloseacetat oder eines Klebstoff gehärteten Filtertows gemäß Anspruch 1.

4. Verfahren zur Herstellung eines Tabakrauchfilterelements nach Anspruch 3 durch Versehen eines Filtertows, bestehend aus Celluloseacetatfilamenten und/oder Celluloseacetatspinnfasern, mit einem Weichmacher für Celluloseacetat oder einem Klebstoff, anschließendes queraxiales Verdichten und gegebenenfalls Umhüllen dieses Filtertows mit einem Umhüllungsstreifen, Zerschneiden des so verdichteten und gegebenenfalls umhüllten Filtertows in einzelne Tabakrauchfilterstäbe und schließlich Zerschneiden dieser Tabakrauchfilterstäbe in einzelne Tabakrauchfilterelemente, dadurch gekennzeichnet, daß als Filtertow ein solches eingesetzt wird, beim dem das Celluloseacetat, aus dem die Celluloseacetatfilamente und die Celluloseacetatspinnfasern bestehen, in Aceton löslich ist und eine Acetylzahl von mindestens 53 % aufweist, und die Celluloseacetatfilamente bzw. -spinnfasern einer Hydrolysebehandlung der Art unterzogen werden, daß das an der Oberfläche befindliche Celluloseacetat dieser Celluloseacetatfilamente bzw. -spinnfasern nach der Hydrolysebehandlung eine Acetylzahl von weniger als 53 %, vorzugsweise von weniger als 49 %, aufweist.

5. Verfahren nach Anspruch 4, dadurch gekennzeichnet, daß die Hydrolysebehandlung mit Hilfe von Natronlauge oder mit Hilfe von gasförmigem Ammoniak durchgeführt wird.

6. Verfahren nach Anspruch 5, dadurch gekennzeichnet, daß die Hydrolysebehandlung mit Hilfe von gasförmigem Ammoniak an den Tabakrauchfilterstäben oder an den Tabakrauchfilterelementen durchgeführt wird.

## Claims

1. Filter tow comprising cellulose acetate filaments and/or cellulose acetate spun fibres substantially produced by spinning cellulose acetate filaments by pressing a solution of cellulose acetate, with an acetyl number of at least 53%, in acetone through a spinning nozzle with a plurality of openings and optionally subsequently cutting the cellulose acetate filaments into cellulose acetate spun fibres and combining a plurality of the cellulose acetate filaments and/or cellulose acetate spun fibres thus obtained into a filter tow, characterised in that the cellulose acetate filaments or the cellulose acetate spun fibres are subjected to a hydrolysis treatment such that the cellulose acetate situated at the surface of these filaments and spun fibres has an acetyl number of less than 53%, preferably of less than 49%, after the hydrolysis treatment.

2. Method of manufacturing a filter tow as claimed in claim 1, characterised in that the hydrolysis treatment is performed with the aid of caustic soda or with the aid of gaseous ammonia.

3. Tobacco smoke filter element comprising a section of a transverse axially compressed filter tow as claimed in claim 1 hardened with the aid of a plasticiser for cellulose acetate or an adhesive.

4. Method of manufacturing a tobacco smoke filter element as claimed in claim 3 by providing a filter tow, comprising cellulose acetate filaments and/or cellulose acetate spun fibres, with a plasticiser for cellulose acetate or an adhesive, subsequent transverse axial compression and optionally enveloping this filter tow with a wrapping sheet, cutting the thus compressed and optionally enveloped filter tow into individual tobacco smoke filter rods and subsequently cutting these tobacco smoke filter rods into individual tobacco smoke filter elements, characterised in that a filter tow is used in which the cellulose acetate, of which the cellulose acetate filaments and the cellulose acetate spun fibres consist, is soluble in acetone and has an acetyl number of at least 53% and the cellulose acetate filaments or spun fibres are subjected to a hydrolysis treatment such that the cellulose acetate situated at the surface of the cellulose acetate filaments or spun fibres has an acetyl number of less than 53%, preferably of less than 49%, after the hydrolysis treatment.

5. Method as claimed in claim 4, characterised in that the hydrolysis treatment is performed with the aid of caustic soda or with the aid of gaseous ammonia.

6. Method as claimed in claim 5, characterised in that the hydrolysis treatment is performed with the aid of gaseous ammonia on the tobacco smoke filter rods or on the tobacco smoke filter elements.

## Revendications

1. Etoupe filtrante formée de filaments d'acétate de cellulose et/ou de fibres discontinues d'acétate de cellulose, fabriquée essentiellement par filage de filaments d'acétate de cellulose par compression d'une solution d'acétate de cellulose ayant un indice d'acétyle d'au moins 53 % dans de l'acétone à travers une filière ayant plusieurs ouvertures, suivie le cas échéant d'un découpage des filaments d'acétate de cellulose en fibres discontinues d'acétate de cellulose et d'un regroupement d'une pluralité des filaments d'acétate de cellulose et/ou des fibres discontinues d'acétate de cellulose ainsi obtenus en une étoupe filtrante, caractérisée en ce qu'on soumet les filaments d'acétate de cellulose ou les fibres discontinues d'acétate de cellulose à un traitement par hydrolyse de façon telle que l'acétate de cellulose situé à la surface de ces filaments et de ces fibres discontinues présente un indice d'acétyle inférieur à 53 %, de préférence inférieur à 49 %, après le traitement par hydrolyse.

2. Procédé de fabrication d'une étoupe filtrante selon la revendication 1, caractérisé en ce qu'on effectue le traitement par hydrolyse à l'aide d'une lessive de soude ou à l'aide d'ammoniac gazeux.

3. Elément filtrant la fumée de tabac, formé d'un segment d'une étoupe filtrante selon la revendication 1, comprimée selon l'axe transversal et durcie à l'aide d'un émollient pour l'acétate de cellulose ou à l'aide d'une colle.

4. Procédé de fabrication d'un élément filtrant la fumée de tabac selon la revendication 3, dans lequel on dote une étoupe filtrante formée de filaments d'acétate de cellulose et/ou de fibres discontinues d'acétate de cellulose d'un émollient pour l'acétate de cellulose ou d'une colle, ensuite, on la comprime selon l'axe transversal et le cas échéant, on entoure cette étoupe filtrante d'une bande enveloppante, on découpe l'étoupe filtrante ainsi comprimée et éventuellement enveloppée pour obtenir des bouts filtres contre la fumée de tabac et enfin, on découpe ces bouts filtres contre la fumée de tabac en des éléments individuels pour filtrer la fumée de tabac, caractérisé en ce qu'on utilise une étoupe filtrante dans laquelle l'acétate de cellulose qui constitue les filaments d'acétate de cellulose et les fibres discontinues d'acétate de cellulose est soluble dans l'acétone et présente un indice d'acétyle d'au moins 53 %, et en ce qu'on soumet les filaments ou les fibres discontinues d'acétate de cellulose à un traitement par hydrolyse de façon telle que l'acétate de cellulose situé à la surface de ces filaments et de ces fibres discontinues d'acétate de cellulose présente un indice d'acétyle inférieur à 53 %, de préférence inférieur à 49 %, après le traitement par hydrolyse.

5. Procédé selon la revendication 4, caractérisé en ce qu'on effectue le traitement par hydrolyse à l'aide d'une lessive de soude ou à l'aide d'ammoniac gazeux.

6. Procédé selon la revendication 5, caractérisé en ce qu'on effectue le traitement par hydrolyse à l'aide d'ammoniac gazeux sur les bouts filtres contre la fumée de tabac ou sur les éléments filtrant la fumée de tabac.
